# EUROPEAN PATENT APPLICATION

(11) **EP 3 909 663 A1**
(43) Date of publication of application: **17.11.2021**
(21) Application number: 20382412.3
(22) Date of filing: 15.05.2020
(51) Int. Cl.: B01D 35/04, C02F 5/14, B01D 29/33

(54) **CARTRIDGE ASSEMBLY, REPLACEABLE FILTER CAPSULE, AND FILTER SYSTEM**

(71) Applicant: Tapp Water S.L., 08004 Barcelona (ES)
(72) Inventor: JERN, Magnus, 08004 Barcelona (ES); SCHWARZ, Alexander, 08004 Barcelona (ES); TROYANO, Marina, 08004 Barcelona (ES); BENDER, Nicholas, 08004 Barcelona (ES)
(74) Representative: Mohammadian, Dario

(57) **Abstract**

Different aspects of the invention refer to an environmentally friendly cartridge assembly for housing a user-friendly replaceable filter capsule, which minimizes the use of plastics, or other non-biodegradable materials, such as metals or silicone or glue, enabling only the filter itself to be replaced once its lifetime is over, that is, the filter capsule is sold as such, and is recycled also as such. This minimalistic configuration minimizes the amount of wastage, providing an overall more sustainable product. The configuration of the cartridge enables the easy replacement of the filter capsules, facilitating the adoption of this environmentally friendly solution as the filter capsules have to be replaced periodically. The overall flat filter capsule and cartridge assembly reduces the overall size of the filter system comprising the cartridge and filter capsule increasing its adoption by users, either inside other products necessitating filtered liquids, or at the faucet of a sink.

## Description

### FIELD OF THE INVENTION

This invention relates to the field of filter systems, and in particular, to an environmentally friendly cartridge assembly for housing easily replaceable filter capsules.

### BACKGROUND

Filtration systems exist which are adapted to clean water by removing different types of impurities, or for improving the taste of the water. One type of water filters are connected offline to the piping system, filtering the water in an external circuit, and feeding it into the piping system where necessary. Another type of water filters are the so-called inline water filters, connected in series to the piping system. Most existing systems are meant for large volume water filtration, such as those used in city water filtration plants, or industrial plants for their own use. Likewise, even for home use, most filtration systems are so bulky that they are housed in separate rooms, such as in the basement or under the sink.

The filtration of water for mass consumer use at point-of-use is of increasing popularity, either at home or at the working place, and inline water filters have been developed which are adapted to be connected directly onto the faucet, or tap, or at least directly onto in-building water pipes, thereby delivering ready-filtered water to any other domestic or working product, such as a water dispenser or a coffee machine. This allows filtering the water entering the building at the point-of-use, directly where the user needs it. Such filters comprise different water filtration technologies and all of them necessitate periodic replacement of the filter itself. Typically, tap water filters should be replaced every month or so, as their small size does not allow them to have a longer optimal filtering lifetime.

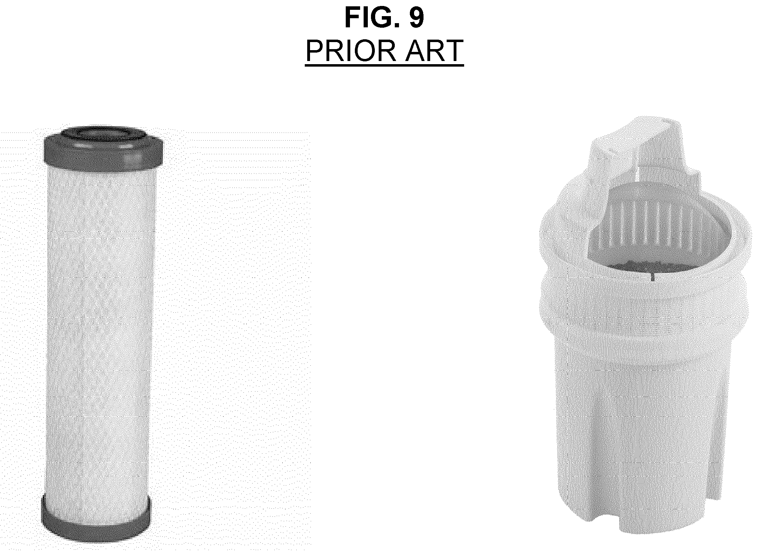

However, current replacement filters suffer from a number of drawbacks. The filters are sold as an integral non-separable part of a larger cartridge. **FIG. 9** depicts two such prior art filter cartridges. The left-side cartridge is made of an outer plastic netting with the filter non-removably fixed within the housing by various permanent means. This cartridge has additional silicone and plastic end-fixing elements. Once the useful lifetime of the filter ends, this configuration necessitates the replacement of the whole cartridge in order to replace the contents which actually perform the filtering action. The right-side cartridge is also made of an outer plastic housing with the filter, in this case represented by the loose black granules within, housed within the housing by various permanent means, thereby necessitating the replacement of the whole cartridge. In fact, the design of conventional cartridges, such as these two examples, is meant to impede the replacement simply of the filter itself or of the filter granules, obligating the user to throw away the whole cartridge, with its several plastic, silicone, or metallic components, or glue, in order to purchase a completely new cartridge. This replacement process takes place every month or so, or every time the filter's lifetime finishes. This implementation represents an incredible waste of resources and environmentally unfriendly.

The excessive use of plastic in society has far reaching negative implications for flora, fauna, as well as the well-being of human populations. Plastic recycling processes are not optimal, most of the plastic thrown away is not recycled properly, and a lot of it is simply dumped into landgraves or into deep sea. The existence of artificial garbage islands is well documented, as water currents bring all the plastic and garbage generated by society together into landmasses. More importantly, plastic decomposes slowly, and micro plastics enter the food chain from the sea. Several investigations have proven how most fish and seafood which humans consume have microplastics, thereby entering directly into our bodies. These investigations also conclude that there is a non-negligible amount of plastic within our bodies due to this unhealthy ecosystem. Furthermore, this problem is exacerbated the lower the quality of the plastic. Non-coincidentally, the plastic used for periodically replaceable products is precisely of this low-quality kind, as there is no market need for it to be of higher quality.

Therefore a need exists for effectively solving the abovementioned problems.

### SUMMARY

It is therefore an object of the present invention to provide solutions to the above-mentioned problems, as defined by the independent claims. Preferred embodiments are defined by the dependent claims. In particular, it is an object of the invention to provide a novel cartridge assembly which minimizes the use of plastics, or other non-environmentally friendly materials, such as metals or silicone. This is accomplished by providing an assembly configured for housing a removably attachable filter capsule, enabling only the filter itself to be replaced once its lifetime is over. All other cartridge parts and components remain separable from the filter capsule, and are not thrown away or recycled. The filter capsule itself does not comprise any plastic, silicone, metal, or glue. The inventors have made a conscious design process to minimize the amount of plastic needlessly utilized, and for the filter itself, have removed as many components as possible, leaving only the minimum necessary components for handling the filter to be replaced.

Therefore, it is one object of the present invention to provide an environmentally friendly filter cartridge for housing a replaceable filter capsule.

It is another object of the present invention to provide an environmentally friendly replaceable filter capsule for housing within the filter cartridge.

It is yet another object of the present invention to provide an environmentally friendly filter system comprising a filter cartridge for housing a replaceable filter capsule.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means. The various means disclosed may be implemented as software modules within a computer program.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts two filter systems according to two embodiments of the invention.
**FIG. 2** depicts the filter system according to the first embodiment of the invention together with different stages of the filter capsule replacement process.
**FIG. 3** depicts the inside of the cartridge of the filter system according to the first embodiment.
**FIG. 4** depicts the filter system according to the second embodiment of the invention together with different stages of the filter capsule replacement process.
**FIG. 5** depicts the inside of the cartridge of the filter system according to the second embodiment.
**FIG. 6** depicts a filter capsule according to one embodiment of the invention.
**FIG. 7** depicts one aspect of a filter capsule.
**FIG. 8** depicts a top view of the bottom pressure means comprising at least one orifice for allowing the exit of the filtered water.
**FIG. 9** depicts two prior art filter cartridges.

### DETAILED DESCRIPTION OF THE INVENTION

Whereas this invention will be described using water as the liquid to be filtered, the skilled artisan understands that other liquids can also be applied to the filter, as long as the filtering components within the filter capsule are adapted to filter it. The remaining constructional details of the different embodiments of the invention are configured for other liquid types as well. For ease of reference, the rest of the description will make reference to water.

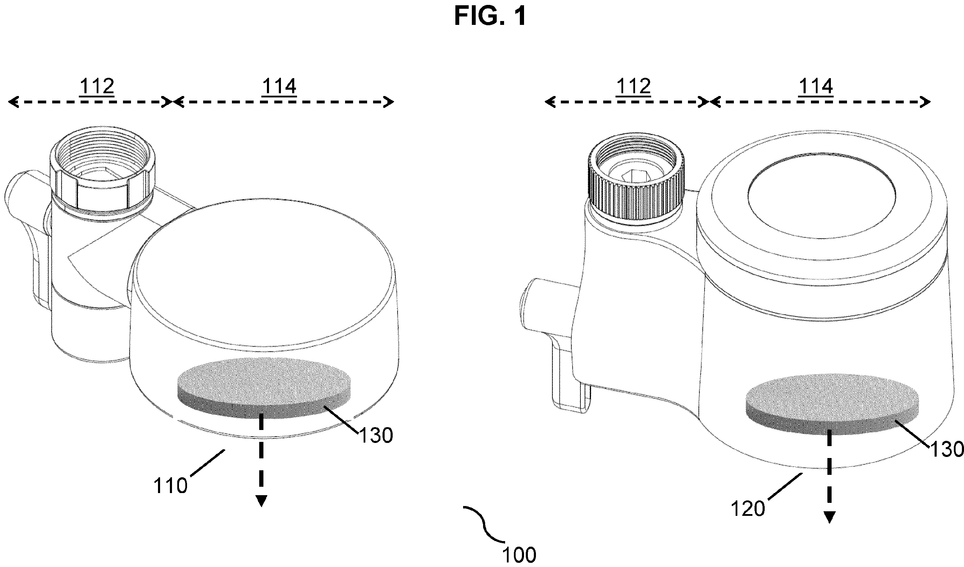

**FIG. 1** depicts two filter systems 100 (110, 120) according to two embodiments of the invention. Each filter system comprises two halves (112, 114). The first half, the inlet 112, is configured for being attached directly to a water pipe or to be attached to a faucet, or tap, from which water enters the filter. In one aspect, the inlet is configured to integrate the filter into other products to provide clean water, for example, for coffee makers, tea kettles, ice makers and other home appliances with limited space requiring clean tap water, such as water carbonation device such as Sodastream, Rocean or similar.

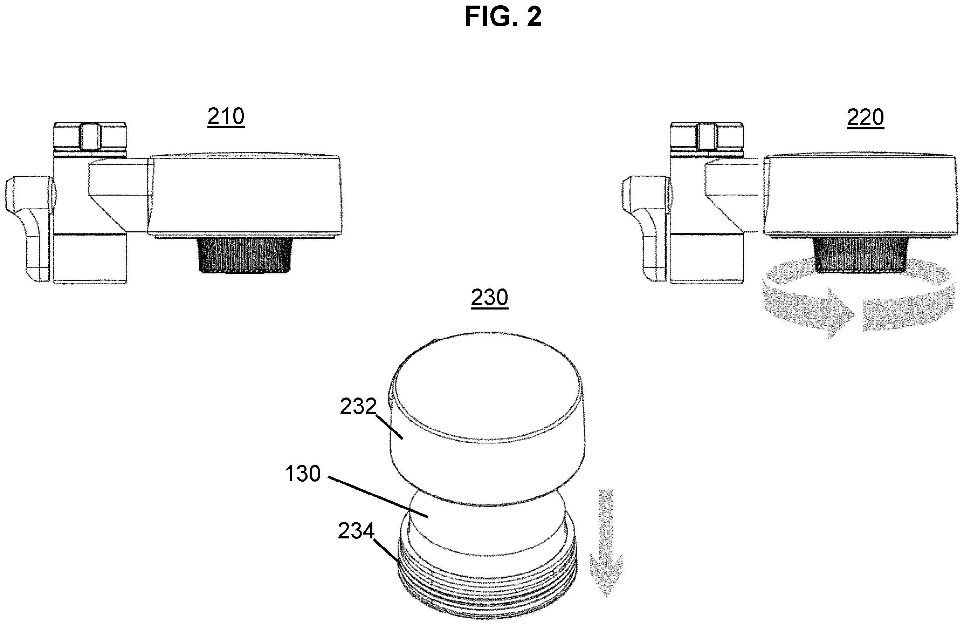

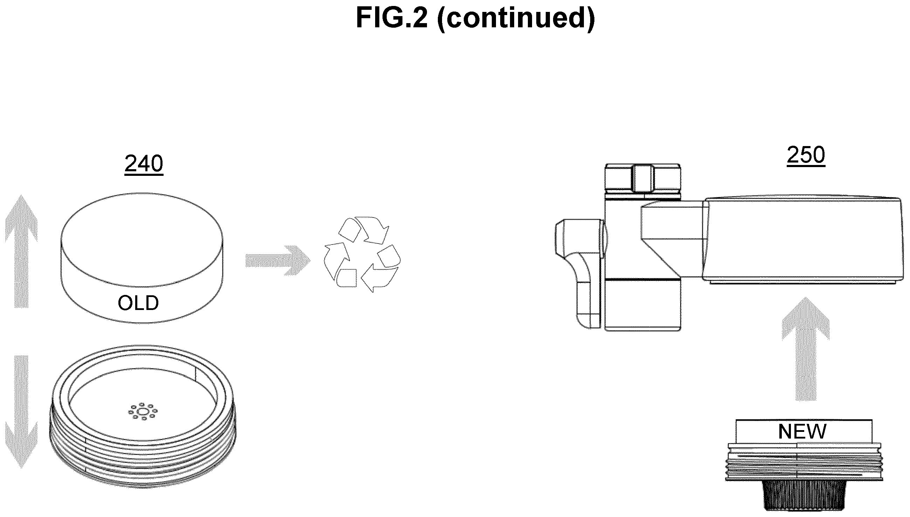

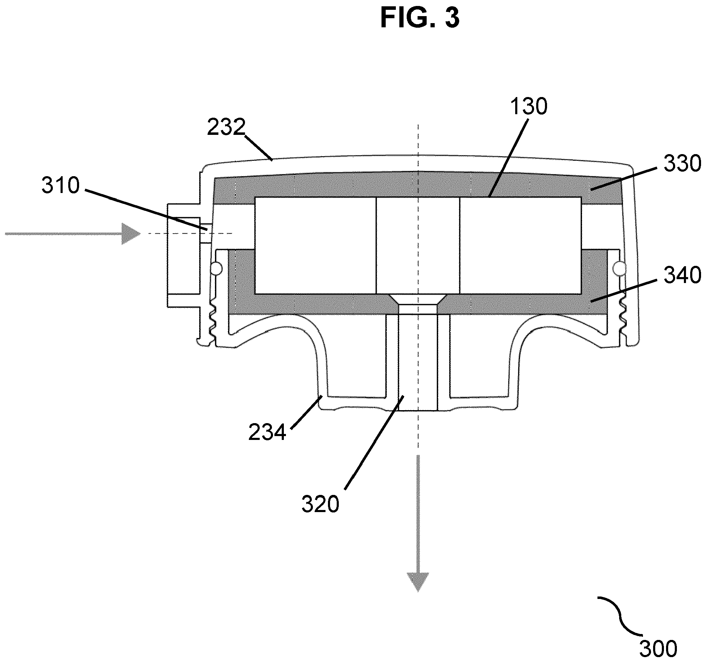

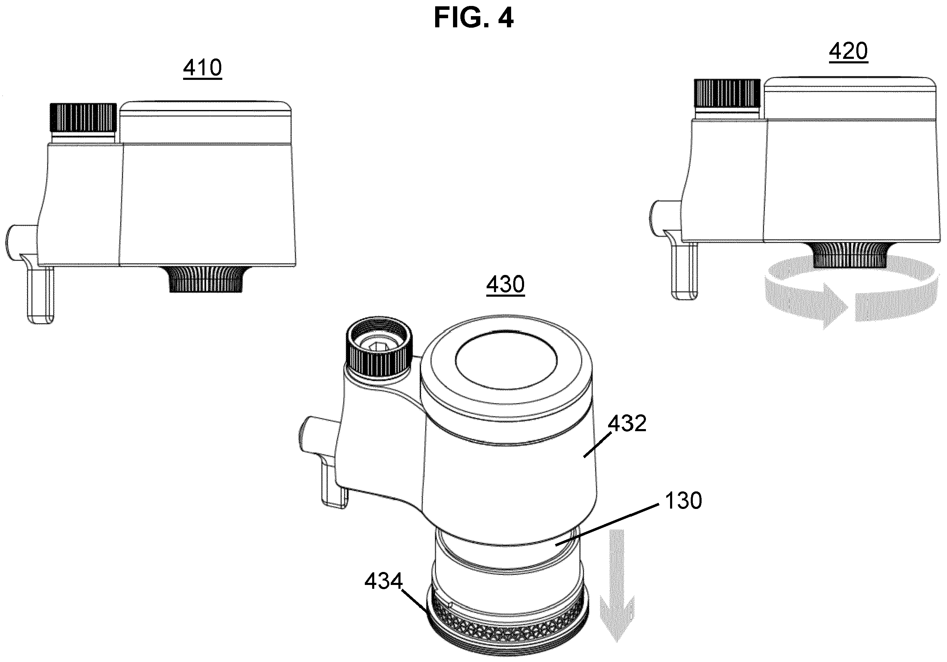

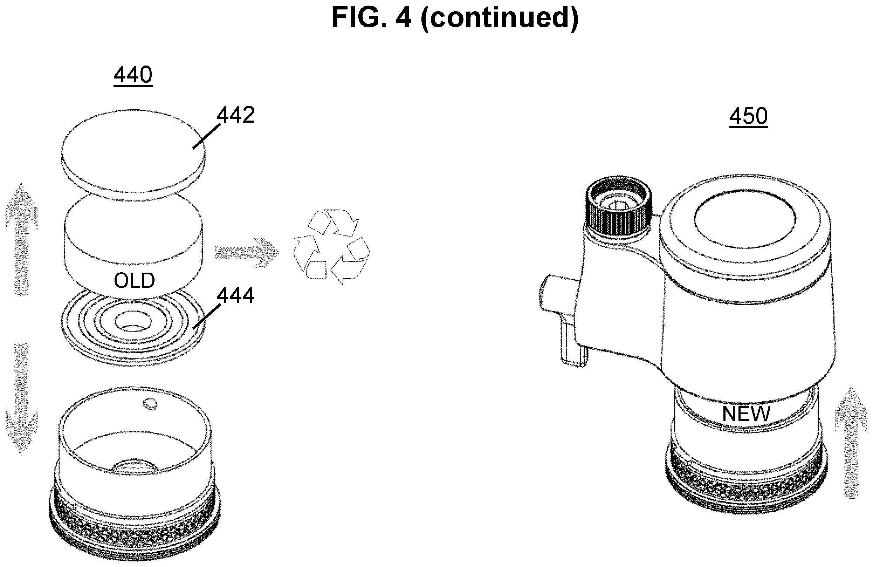

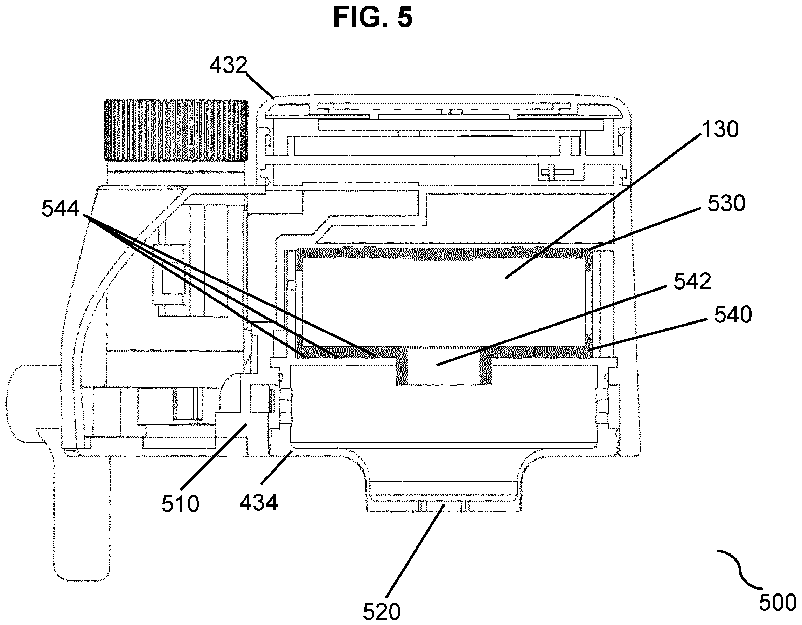

The water is directed from the inlet to the second half, the cartridge 114, which comprises the replaceable filter capsule 130. The water is filtered by the filter capsule and exits the filter system from the bottom of the cartridge (depicted by the dotted arrow). The filter capsule is meant to be only a visual representation, and not drawn to scale. In one aspect, the cartridge is permanently fixed to the inlet. In another aspect, the cartridge is removably coupled to the inlet. The two embodiments differentiate from each other with respect to a number of features which are described later in relation to FIGs. 2 and 3 for the first embodiment and FIGs. 4 and 5 for the second embodiment.

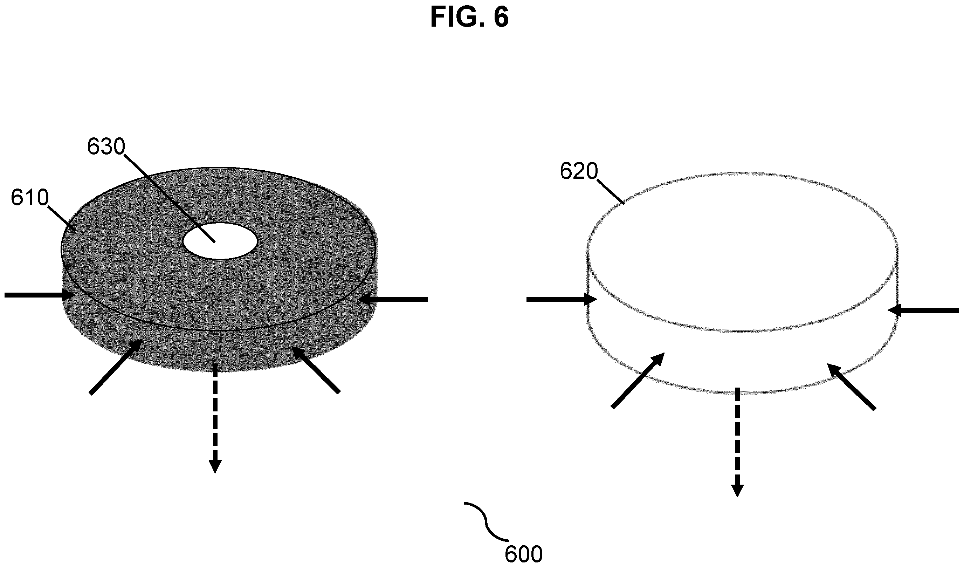

Both filter system embodiments are the same in as far as the filter capsule 130 refers. **FIG. 6** depicts a filter capsule 600 according to one embodiment of the invention. The filter capsule is adapted for use with either filter system embodiment, the first 110 embodiment or the second 120 embodiment. The filter capsule comprises a central filter block 610 completely surrounded by a permeable membrane 620. The filter capsule has been designed to be permeated by unfiltered water laterally, from all lateral directions surrounding its circumference (as depicted by the solid arrows), and after being laterally filtered by the filtering block, the filtered water exits through a central cavity 630 (or passage, or hole) drawn by gravity downwards (as depicted by the dotted arrow).

In one example implementation, the filter block is a carbon filter block in a doughnut shaped configuration, composed of active carbon particles for removing organic compounds such as VOCs, herbicides, pesticides, THMs, chlorine, and other non-polar contaminants. It also reduces some other charged components in water such as nitrates, chloride and some heavy metals including lead. The carbon block does not reduce healthy minerals like calcium, magnesium, potassium and sodium.

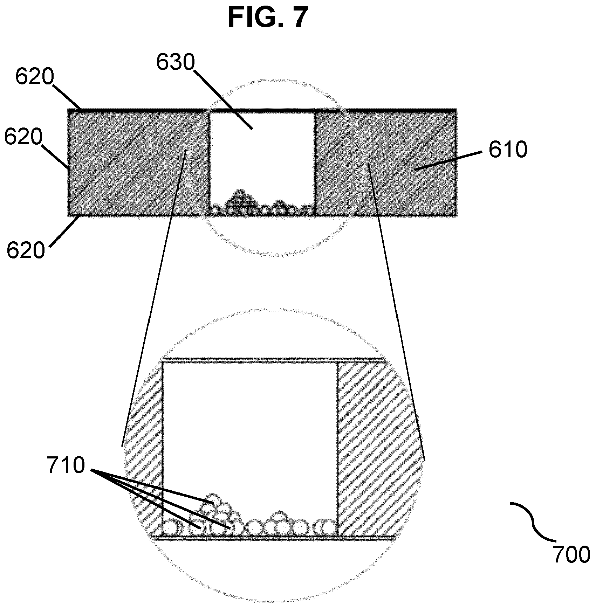

In one aspect, the active carbon particles are optionally mixed with other filtering elements, such as polyphosphate particles for removing limescale. These particles release phosphates in the water to bind chemically with calcium, in order to prevent it from forming scale (binding between calcium and carbonate). In yet another aspect 700, the polyphosphate particles 710 are placed at the bottom of the central cavity, sustained by the outer membrane, as depicted in **FIG. 7****.** In an example implementation, the permeable membrane is nonwoven fabric, such as polypropylene. The filter block is fully wrapped by the outer membrane, which helps reduce turbidity caused by suspended solid found generally in tap water.

The carbon block with polyphosphate and nonwoven fabric provide four layers of filtering. First, the nonwoven fabric filters out larger microorganisms, sand/dirt and other impurities. It also protects the carbon block. Second, The carbon block adsorption from the activated carbon removes chemical organic material, chlorine, chlorine byproducts (VOCs, THMs, HAAS, and so on) taste, odor, pesticides, herbicides, PFAS and 50+ other contaminants accordingly and reduces heavy metals including lead, copper, mercury and more. Third, the carbon block is highly compressed to prevent particles larger than 1 to 2 micrometers to pass through. This physical filtering prevents for example all microplastics, suspended particles and most bacteria from passing through the filter. It also prevents most particles from pipe corrosion and biofilm from passing through. Fourth, the polyphosphate is used for scale reduction by sequestering the calcium and magnesium minerals which cause limescale and corrosion. A polyphosphate is a chain of phosphates which dissolves slowly in water when it is in contact with it. Dissolved polyphosphate is a complex mineral that has may functions. The main function is to form a soluble complex with calcium preventing limescale to form (also known as calcium carbonate which is insoluble complex at high temperature).

In another aspect, minerals and vitamins can be added to the capsule as health supplements for vitamin C, D, iron, magnesium, calcium, potassium and other minerals and vitamins for which people may have a deficiency. In yet another aspect, taste essences (natural flavours) can be added to the capsule to give the tap water the taste of for example strawberry, lime, lemon, cucumber or sweetness. In yet another aspect, these additives can be added within a chamber of the filter instead or in addition to the capsule.

This configuration allows the filter capsule to be safely handled by the user while replacing it, without any risk of contacting possibly harmful chemical substances. The nonwoven fabric is also the only other element, apart from the actual elements which filter the water, which is part of the capsule. In other words, the filter capsule has no plastic or silicone or metallic components, or even glue for binding the membrane to the filter block. It is sold as such, and recycled also as such. This minimalistic configuration minimizes the amount of wastage, providing an overall more sustainable product. It also minimizes the weight of the filter capsule, facilitating its transport for recycling, thereby enabling an easier and globally more eco-friendly recycling process (less carbon footprint during transport). Further, as will be seen, the configuration of the cartridge enables the easy replacement of the filter capsules, facilitating the adoption of this environmentally friendly solution as the filter capsules have to be replaced periodically. The substantially flat filter capsule design also enables configuring an overall flatter cartridge assembly, thereby reducing the overall size of the filter system, increasing its adoption by users, especially if directly attached to home faucets, or inserted within other home consumer products, such as coffee machines.

**FIG. 2** depicts the filter system 110 according to the first embodiment of the invention together with different stages of the filter capsule replacement process. The first view 210 depicts the assembled filter system, comprising the inlet and the cartridge housing the filter capsule. The cartridge 114 comprises a top cartridge body 232 and a bottom filter capsule chamber 234, which is housed within the body. The body and chamber are configured allowing their easy attachment and detachment. The chamber is housed almost fully within the body, thereby minimizing the space or volume of the cartridge. This allows maintaining an overall flat configuration and reduces the volume occupied, resulting in a trouble-free filter system when being used, for example, in a kitchen faucet, where ample space under and around the sink area is an important factor for user commodity.

The attachment or detachment can be implemented by a configuration allowing screwing or unscrewing, whereas it can also be implemented by any other means allowing the removable coupling of the filter capsule chamber to the cartridge body. The detachment 220 of the filter capsule chamber allows it to separate simply due to the downward pull of gravity 230 (as shown by the arrow, in this case, after unscrewing). The old filter capsule can then be removed 240 for recycling, a new filter capsule placed within the cartridge chamber 234, and inserted into the body and attached 250 back to complete the replacement process.

**FIG. 3** depicts the inside of the cartridge 114 of the first embodiment 110. In this view, the filter capsule 130 rests on the inner bottom surface of the filter capsule chamber 234, which in turn is attached to the body 232. The body comprises an entry point 310 configured for allowing the entry of unfiltered water to the body (from the exit of the inlet 112). The body also comprises an exit point 320 configured for allowing the exit of filtered water from the chamber. The water typically flows at very high pressure through the filter system. Not only is the water capable of achieving a high pressure already at the exit of the pipeline or faucet, but the dimensions of the internal canals and chambers of the filter system can vary this pressure considerably. In particular, the pressure is particularly high in the canal inbetween the inlet 112 and the cartridge 114. With time, this high flow generates leaks, causing the water to flow out of the body and not necessarily through the filter capsule. Further, as mentioned, the filter capsule is configured to act optimally when permeated laterally. However, due to the high pressure, water can also enter the filter capsule from its top, entering the central cavity and exiting the filter capsule without filtering.

In order to solve these problems related to water pressure and the characteristics of the particular filter capsule design, the cartridge is configured with pressure means. In one aspect, the pressure means comprises a top pressure means 330 conformed integrally into the top inside surface of the cartridge body. In another aspect, the pressure means comprises a bottom pressure means 340 conformed integrally into the bottom inside surface of the filter capsule chamber. In yet another aspect, the pressure means comprises both top and bottom pressure means.

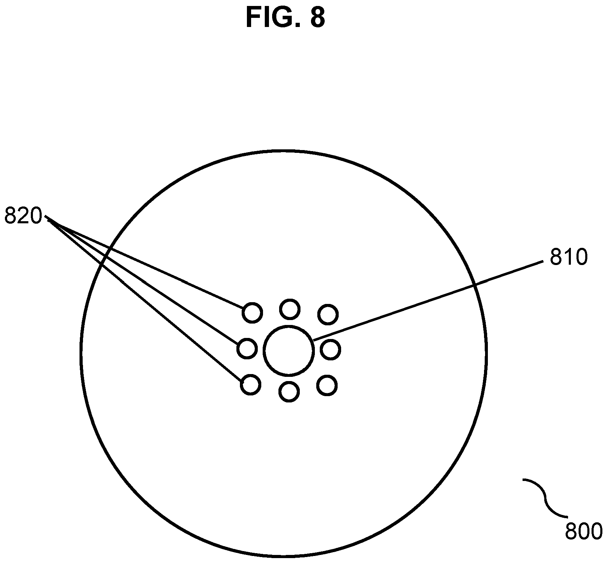

**FIG. 8** depicts a top view of the bottom pressure means comprising at least one orifice for allowing the exit of the filtered water. In one aspect, the orifice configuration comprises one main orifice 810, centrally located, and dimensioned to efficiently evacuate the filtered water from the central inner cavity of the filter capsule. In another aspect, additionally to the main central orifice, a plurality of smaller orifices 820 are configured around the main orifice. These secondary orifices are configured in a ring, or square shaped, or any other, configuration These secondary orifices act as smoothers, enabling the large water pressure to be lowered at the exit point, and ejecting a number of smaller water sprays together with the main water ejection. The advanrage is that water splashing is prevented because the jet is much smoother.

Together, once the chamber is completely attached to the body, the pressure means perform a plurality of functions. Firstly, the pressure means are each configured with a predefined height, so that the filter capsule is automatically positioned with the optimal height with respect to the unfiltered water entry point 310 as the chamber is attached to the body. Secondly, the pressure means are each configured to completely surround the internal perimeter of the body and the chamber, respectively, thereby effectively sealing the top surface and bottom surface of the filter capsule. With this configuration, the high pressure water from the entry point is fully forced laterally into the filter capsule, without any leaking onto the top surface, or outside the body. Further, due to the correct alignment, it is assured that no unnecessary turbulences are caused, and all the water flows through smoothly. Also, it facilitates easy and fast filter capsule replacement by any user, without worrying about whether it has to be carefully placed in a particular delicate configuration. Since this design lacks mechanical moving parts, it will also be very robust and last a very long time. It therefore enables construction using high quality plastics so that they last also a very long time.

In the following, the second filter embodiment will be detailed, wherein it will be appreciated that the cartridge of this second embodiment differs from the cartridge of the first embodiment in that the pressure means are not integrally formed together with the rest of the cartridge. In the second embodiment, the pressure means are loose separate elements. Whereas they perform at least the same function, they are removably placed allowing them to be washed and cleansed at the same time as allowing simple and easy replacement of the filter capsule.

**FIG. 4** depicts the filter system 120 according to the second embodiment of the invention together with different stages of the filter capsule replacement process. The first view 410 depicts the assembled filter system, comprising the inlet and the cartridge housing the filter capsule. The cartridge 114 comprises a top cartridge body 432 and a bottom filter capsule chamber 434, which is housed within the body. The body and chamber are configured allowing their easy attachment and detachment. The chamber is housed almost fully within the body, thereby minimizing the space or volume of the cartridge. This allows reducing the volume occupied, resulting in a trouble-free filter system when being used, for example, in a kitchen faucet, where ample space under and around the sink area is an important factor for user commodity.

The attachment or detachment can be implemented by a configuration allowing screwing or unscrewing, whereas it can also be implemented by any other means allowing the removable coupling of the fiter capsule chamber to the cartridge body. The detachment 420 of the filter capsule chamber allows it to separate simply due to the downward pull of gravity 430 (as shown by the arrow, in this case, after unscrewing). The old filter capsule can then be removed 440 for recycling, a new filter capsule placed within the cartridge chamber 434, and inserted into the body and attached 450 back to complete the replacement process.

This replacement process differs from that of the first embodiment in that, while removing the old filter capsule, the top pressure means 442 and the bottom pressure means 444 can also be temporarily separated from the cartridge and from the filter capsule. Whereas replacement of the filter capsule is possible without removing one of the pressure means (442, 444), it is envisioned that at least the other pressure means has to be removed. The assembly requires the bottom pressure means 444 to be positioned inside the chamber 434, the new filter capsule to be rested on top of the bottom pressure means, and then covered by the top pressure means 442, in a sandwich-like configuration, before placing all three back into the chamber for attaching into the body. As mentioned, the skilled artisan realizes that the replacement process can be performed in a different order as well. As can be seen from FIG. 4, the depicted bottom pressure means comprises a plurality of concentric rings, which help to further add pressure to the carbon block from below, assuring a good seal against water leakage, and also ensuring the correct positioning of the filter capsule, so that it does not move at all.

**FIG. 5** depicts the inside of the cartridge 114 of the second embodiment 110. In this view, the filter capsule 130 rests on the bottom pressure means 540 which in turn rests on the inner bottom surface of the filter capsule chamber 434, which in turn is attached to the body 432. The body comprises at least one entry point 510 configured for allowing the entry of unfiltered water to the body (from the exit of the inlet 112). The body also comprises an exit point 520 configured for allowing the exit of filtered water from the chamber. This embodiment suffers from the same water pressure related problems of the first embodiment. As mentioned, the high flow generates leaks, causing the water to flow out of the body and not necessarily through the filter capsule. Further, due to the high pressure, water can also enter the filter capsule from its top, entering the central cavity and exiting the filter capsule without filtering.

Hence, in order to solve these problems, the cartridge of this embodiment is configured with pressure means. In one aspect, the pressure means comprises a top pressure means 530 conformed from a flat-shaped cylindrical element, such as a plastic disc, and is dimensioned to fit tightly into the top inside surface of the cartridge body 432. In another aspect, the pressure means comprises a bottom pressure means 540 also conformed from a flat-shaped cylindrical element, such as a plastic disc, and is dimensioned to fit tightly into the bottom inside surface of the filter capsule chamber 434. The bottom pressure means can have the same orifice configuration of FIG. 8, comprising one main orifice 810 (or 542), and optionally, a plurality of smaller orifices 820 (or 544) around the main orifice. In yet another aspect, the pressure means comprises a top and bottom pressure means.

The functions performed by the pressure means of the second embodiment once the chamber is completely attached to the body is at least equivalent to those performed by the pressure means of the first embodiment. In short, their predefined height ensures that the filter capsule is automatically positioned with the optimal height with respect to the unfiltered water entry point 510 as the chamber is attached to the body. They also ensure the effective sealing of the top and bottom surfaces of the filter capsule, preventing the pressurised water leaking onto the top surface, or outside the body. They also ensure the smooth passage of the water. Despite the fact that they are not integrally conformed into the body or chamber, respectively, their design ensures easy and fast filter capsule replacement by any user, without worrying about whether it has to be carefully placed in a particular delicate configuration. Since this design lacks mechanical moving parts, it will also be very robust and last a very long time. It therefore enables construction using high quality plastics so that they last also a very long time.

Additionally to the above functions, the pressure means of the second embodiment have further advantageous features. It has been identified that, depending on the particular durability of some filter capsules, and the usage of the filter components held within, the filter capsule can lose its original density, and become flabby, thereby generating the similar water leaking problems as mentioned before. Therefore, the top pressure means of this second embodiment is available in different heights, or disc widths. In case the user identifies such non-optimal density reduction, the top pressure means can be easily and quickly replaced by another one with a larger width, in order to re-establish the correct pressure and sealing properties of the pressure means, thereby solving any temporary issues, until a new filter capsule is obtained.

Therefore the different embodiments and aspects of the invention described provide an environmentally friendly cartridge which minimizes the use of plastics, or other non-biodegradable materials, such as metals or silicone. The cartridge is configured for housing a removably attachable filter capsule, enabling only the filter capsule itself to be replaced once its lifetime is over. The filter capsule itself does not comprise any plastic, silicone, metal, or glue. Hence, existing filtering systems are improved in that it is enabled that users replace only the filter capsule, without unnecessarily jettisoning other non-environmentally friendly materials. Further, this filter capsule has a very low carbon footprint is as far as its recycling refers. The overall flat and small volume configuration also allows the cartridge to be attached to a faucet, leaving ample sink space as desired in the kitchen, or directly to the piping system and within other products, such as water dispensers or coffee machines. The inventive contribution allows the filter capsule to be safely handled by the user while replacing it, without any risk of contacting possibly harmful chemical substances, however without any plastic or silicone or metallic components, or even glue. The filter capsule is sold as such, and recycled also as such. This minimalistic configuration minimizes the amount of wastage, providing an overall more sustainable product. The configuration of the cartridge enables the easy replacement of the filter capsules, facilitating the adoption of this environmentally friendly solution as the filter capsules have to be replaced periodically. The overall flat filter capsule and cartridge assembly reduces the overall size of the filter system comprising the cartridge and filter capsule increasing its adoption by users.

What has been described comprises several example embodiments. Since it is not possible or feasible to describe all the variations of combinations and permutations of the inventive concept that would give rise to a large number of embodiments and redundant paragraphs, it is understood that the skilled artisan would derive these different possible permutations and combinations of the different embodiments and aspects described after a direct and objective reading of this disclosure. Therefore, the main aspects and embodiments have been described, understanding that they comprise the remaining combinations, variations and modifications, whilst they are comprised within the scope of protection defined by the claims. The skilled person would understand that the presented description of the embodiments does not limit the invention, nor do the drawings.

In the following, further examples of the invention are provided:
A filter cartridge for housing a replaceable filter capsule, the cartridge comprising: a chamber configured for removably supporting the replaceable filter capsule; and a body configured for housing the chamber and the replaceable filter capsule; wherein the chamber and the body are configured for enabling the replaceable filter capsule be permeated by unfiltered liquid circumferentially and configured to evacuate the filtered liquid centrally.

The cartridge, wherein the chamber and the body are configured for removably attaching and/or detaching to eachother. The cartridge, wherein the cartridge comprises handling means in the body and the chamber, the handling means configured for attaching and/or detaching the chamber to and/or from the body, wherein the handling means are configured to enable manipulation even when the cartridge is wet. The cartridge, wherein the body handling means are configured as a substantially round configuration of the shape of the body to enable gripping of the body. The cartridge, wherein the chamber handling means are configured as a texturized protrusion from the bottom of the chamber to enable gripping of the chamber. The cartridge, wherein the chamber is fully housed within the body for the exception of the chamber handling means. The cartridge, wherein the attachment and/or detachment configuration allows screwing/unscrewing, or it is implemented by any other means allowing the removable coupling of the chamber to the body. The cartridge, wherein the detachment of the chamber allows it to separate from the body due to the downward pull of gravity. The cartridge, further comprising an entry point configured in the body configured for allowing the entry of unfiltered liquid to the cartridge. The cartridge, further comprising an exit point configured in the chamber configured for allowing the exit of filtered liquid from the cartridge. The cartridge, further comprising pressure means configured to tightly hold the filter capsule in the correct position. The cartridge, wherein the pressure means are configured with a predefined height, enabling the automatic optimal positioning of the filter capsule with respect to the body entry point once the chamber is attached to the body. The cartridge, wherein the pressure means are configured to completely surround the internal perimeter of the cartridge, thereby effectively sealing the top surface and bottom surface of the filter capsule. The cartridge, wherein the pressure means comprises a top pressure means configured in the inner top surface of the body. The cartridge, wherein the pressure means comprises a bottom pressure means configured in the inner bottom surface of the chamber. The cartridge, wherein the bottom pressure means comprises at least one orifice for allowing the exit of the filtered water. The cartridge, wherein the at least one orifice comprises one main orifice, centrally located, and dimensioned to efficiently evacuate the filtered water from the central inner cavity of the filter capsule. The cartridge, wherein the at least one orifice comprises additionally to the main central orifice, a plurality of smaller orifices configured around the main orifice. The cartridge, wherein the pressure means are permanent fixtures conformed integrally into the body and/or the chamber. The cartridge, wherein the pressure means are loose separate elements removably placed within the cartridge. The cartridge, wherein the pressure means are conformed from a flat-shaped cylindrical element, such as a plastic disc. The cartridge, wherein the top pressure means is configured in different heights, or disc widths.

A replaceable filter capsule configured to be housed in a filter cartridge, the replaceable filter capsule comprising: a substantially flat disc-shaped filter block, comprising a ring of a filtering component surrounding a central cavity; and a permeable membrane configured to fully wrap the filter block; wherein the filter capsule is configured to be permeated by unfiltered liquid circumferentially and configured to evacuate the filtered liquid centrally through the central cavity.

The filter capsule, wherein the filter block is composed of active carbon particles. The filter capsule, wherein the filter block further comprises other filtering elements, such as polyphosphate particles. The filter capsule, wherein polyphosphate particles are placed at the bottom of the central cavity, sustained by the permeable membrane. The filter capsule, wherein the permeable membrane is nonwoven fabric, such as polypropylene. The filter capsule, wherein the filter capsule is dimensioned to fit tightly inside the cartridge.

A filter system for filtering liquids, such as water, the filter system comprising: an inlet for receiving unfiltered liquid from an external source; and a filter cartridge connected to the inlet; wherein the cartridge is configured to house a replaceable filter capsule.

The filter system, wherein the cartridge is permanently fixed to the inlet, or wherein the cartridge is removably coupled to the inlet.

## Claims

1. A filter cartridge for housing a replaceable filter capsule, the cartridge comprising:
a chamber configured for removably supporting the replaceable filter capsule; and
a body configured for housing the chamber and the replaceable filter capsule;
wherein the chamber and the body are configured for enabling the replaceable filter capsule be permeated by unfiltered liquid circumferentially and configured to evacuate the filtered liquid centrally.

2. The cartridge according to claim 1, wherein the chamber and the body are configured for removably attaching and/or detaching to eachother.

3. The cartridge according to claim 2, further comprising an entry point configured in the body configured for allowing the entry of unfiltered liquid to the cartridge and further comprising an exit point configured in the chamber configured for allowing the exit of filtered liquid from the cartridge.

4. The cartridge according to claim 3, further comprising pressure means configured to tightly hold the filter capsule in the correct position.

5. The cartridge according to claim 4, wherein the pressure means are configured with a predefined height, enabling the automatic optimal positioning of the filter capsule with respect to the body entry point once the chamber is attached to the body.

6. The cartridge according to claim 4, wherein the pressure means are configured to completely surround the internal perimeter of the cartridge, thereby effectively sealing the top surface and bottom surface of the filter capsule.

7. The cartridge according to claim 4, wherein the pressure means comprises a top pressure means configured in the inner top surface of the body, and/or wherein the pressure means comprises a bottom pressure means configured in the inner bottom surface of the chamber.

8. The cartridge according to claim 7, wherein the bottom pressure means comprises at least one orifice for allowing the exit of the filtered water, wherein the at least one orifice comprises additionally to a main central orifice, a plurality of smaller orifices configured around the main orifice.

9. The cartridge according to claim 4, wherein the pressure means are permanent fixtures conformed integrally into the body and/or the chamber.

10. The cartridge according to claim 4, wherein the pressure means are loose separate elements removably placed within the cartridge.

11. The cartridge according to claim 10, wherein the pressure means are conformed from a flat-shaped cylindrical element, such as a plastic disc.

12. A replaceable filter capsule configured to be housed in a filter cartridge, the replaceable filter capsule comprising:
a substantially flat disc-shaped filter block, comprising a ring of a filtering component surrounding a central cavity; and
a permeable membrane configured to fully wrap the filter block;
wherein the filter capsule is configured to be permeated by unfiltered liquid circumferentially and configured to evacuate the filtered liquid centrally through the central cavity.

13. The filter capsule according to claim 12, wherein the filter block is composed of active carbon particles.

14. The filter capsule according to claim 13, wherein the filter block further comprises other filtering elements, such as polyphosphate particles, or wherein polyphosphate particles are placed at the bottom of the central cavity sustained by the permeable membrane.

15. A filter system for filtering liquids, such as water, the filter system comprising:
an inlet for receiving unfiltered liquid from an external source; and
a filter cartridge according to claim 1 connected to the inlet;
wherein the cartridge is configured to house a replaceable filter capsule according to claim 12, wherein the cartridge is permanently fixed to the inlet, or wherein the cartridge is removably coupled to the inlet.
